# EUROPEAN PATENT SPECIFICATION

(11) **EP 2 912 915 B1**
(45) Date of publication and mention of the grant of the patent: **19.12.2018**
(21) Application number: 12886989.8
(22) Date of filing: 23.10.2012
(51) Int. Cl.: H04W 74/08, H04W 48/02

(54) **METHOD, USER EQUIPMENT AND BASE STATIONS FOR PERFORMING RANDOM ACCESS PROCEDURES**
VERFAHREN, BENUTZERVORRICHTUNG UND BASISSTATIONEN ZUR DURCHFÜHRUNG VON DIREKTZUGRIFFSVERFAHREN
PROCÉDÉ, ÉQUIPEMENT UTILISATEUR ET STATIONS DE BASE POUR EFFECTUER DES PROCÉDÉS D'ACCÈS ALÉATOIRE

(43) Date of publication of application: 02.09.2015
(73) Proprietor: Telefonaktiebolaget LM Ericsson (publ), 164 83 Stockholm (SE)
(72) Inventor: LU, Qianxi, Beijing 100102 (CN); ZHAO, Zhenshan, Beijing 100102 (CN)
(74) Representative: Brann AB
(86) International application number: PCT/CN2012/083342
(87) International publication number: WO 2014/063298

(56) References cited:
- WO-A1-2011/099623
- WO-A1-2011/157702
- US-A1- 2010 329 193
- US-A1- 2011 250 913
- US-A1- 2012 040 642
- US-A1- 2012 069 756
- "3rd Generation Partnership Project; Technical Specification Group Radio Access Network; Evolved Universal Terrestrial Radio Access Network (E-UTRAN); Carrier-based HetNet ICIC use cases and solutions (Release 11)", 3GPP DRAFT; R3024-040_MARKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 3 August 2012 (2012-08-03), XP050669283, Retrieved from the Internet: URL:http://www.3gpp.org/ftp/tsg_ran/WG3_Iu /TSGR3_77/Docs/ [retrieved on 2012-08-03]
- CATT: "Impact of carrier aggregation on MAC layer", 3GPP DRAFT; R2-095484, no. Miyazaki; 20091012, 12 October 2009 (2009-10-12), XP050390040, [retrieved on 2009-10-04]
- SIMONSSON, A. ET AL.: 'LTE Uplink CoMP Trial in a HetNet Deployment.' VEHICULAR TECHNOLOGY CONFERENCE (VTC FALL), 2012 September 2012, pages 1 - 5, XP032294658
- Stefania Sesia ET AL: "19. Random Access" In: "LTE - the UMTS long term evolution : from theory to practice ; [Including release 10 for LTE-advanced]", 17 February 2009 (2009-02-17), Wiley, Chichester, XP055329751, ISBN: 978-0-470-66025-6 pages 371-406, DOI: 10.1002/9780470978504.ch17,

## Description

### BACKGROUND:

### Field:

Certain exemplary embodiments of the present invention relate generally to random access procedures, and more particularly, to a method, a user equipment, and base stations for performing random access procedures in a heterogeneous network.

### Description of the Related Art:

Various abbreviations that appear in the specification and/or in the drawing figures are defined as below:
- 3GPP: 3rd Generation Partnership Project
- BS: Base Station
- BSR: Buffer Status Report
- CE: Control Element
- CoMP: Coordinated Multi-Point Transmission
- C-RNTI: Cell-Radio Network Temporary Identifier
- DCI: Downlink Control Information
- DL: Downlink
- eNB: evolved Node B
- ePDCCH: enhanced Physical Downlink Control Channel
- ePHICH: enhanced Physical Hybrid ARQ Indicator Channel
- HARQ: Hybrid Automatic Repeat Request
- LTE: Long Term Evolution
- MAC: Media Access Control
- Msg: Message
- PDCCH: Physical Downlink Control Channel
- PHICH: Physical Hybrid ARQ Indicator Channel
- PRACH: Physical Random Access Channel
- RA: Random Access
- RACH: Random Access Channel
- RAN: Radio Access Network
- RAR: Random Access Response
- Rx: Reception
- RRC: Radio Resource Control
- SIB: System Information Block
- TA: Timing Advance
- Tx: Transmission
- UE: User Equipment
- UL: Uplink

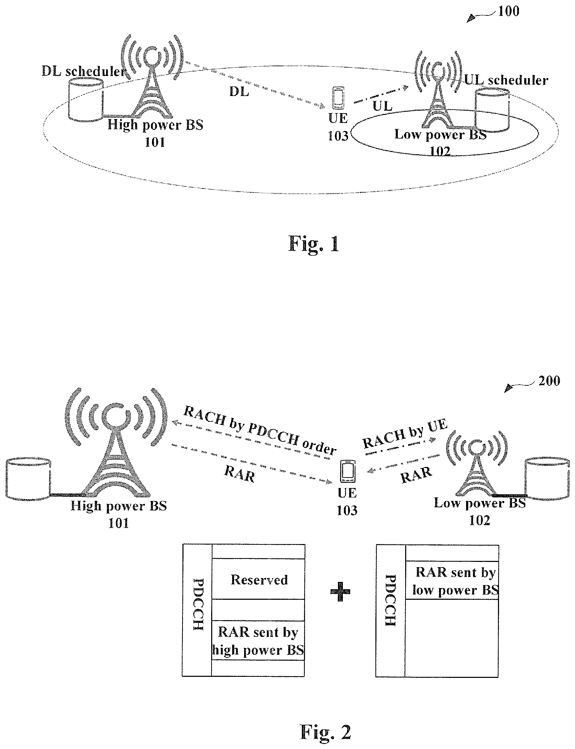

The CoMP Work Item has been approved in the 3GPP RAN plenary #53 meeting in which a heterogeneous network scenario was defined by the 3GPP with respect to the UL CoMP. A key feature in this heterogeneous network is a decoupled DL/UL scenario for pertinent UEs. For a better understanding of the heterogeneous network scenario at issue, discussions will be made with reference to Fig. 1 in which an exemplary and simplified heterogeneous network 100 is illustrated.

As seen from Fig. 1, the heterogeneous network 100 comprises a high power BS 101, a low power BS 102 and a UE 103, wherein a coverage area of the high power BS 101 is depicted with a large ellipse and a coverage area of the low power BS 102 is depicted with a relatively small ellipse according to different power levels. For an easy discussion, the coverage area of the high power BS 101 (e.g., a macro BS) is termed a macro cell and the coverage area of the low power BS 102 (e.g., a pico BS) is termed a pico cell. For a UE (such as the UE 103) located within the macro cell and at the edge of or within the pico cell, the received DL signals from the macro cell are generally stronger than those from the Pico cell. Hence, for the DL transmissions, the UE is associated with the macro cell and receives DL signals from the macro cell.

In contrast, for the UL transmissions, since the UE is closer to the Pico cell than to the macro cell, it would be preferable to select the pico cell as the reception point, in order to save the Tx power of the UE and reduce the potential interference to normal UEs in the pico cell. As such, the UE would connect with the high power BS 101 in the DL direction and connect with the low power BS 102 in the UL direction, which in turn may probably form various backhaul links to a core network (not shown). This way, the high power BS 101 would manage or schedule the DL transmission possibly with a DL scheduler and the low power BS 102 may be in charge of the UL transmission possibly with a UL scheduler, leading to a decoupled DL/UL scenario as noted before. Motivated by this decoupling feature, i.e., reception points (e.g., low power BSs) may be selected independently of transmission points (e.g., high power BSs), separations of DL and UL modules/components have been widely investigated to enable the decoupling scenario to support all sorts of the backhaul connections possibly dependent on different lengths of latency (e.g., good, less than ∼0.5ms latency; medium, ~5ms latency; any, ∼50-100ms latency, the symbol "∼" denoting "approximately"), the MAC/RLC separation, scheduling, power control, and ePDCCH/ePHICH.

Although the decoupled DL/UL scenario as discussed above may be beneficial for heterogeneous communications, it is likely to engender potential problems when implemented in an LTE system. In the LTE system, there is a strict delay requirement for DL/UL coordination in RA procedures, which may cause problems in the decoupled DL/UL scenario that aims to support "any backhaul" (∼50-100ms latency), as will be discussed in detail below.

In the current LTE system, the RA procedures can be divided into a contention based RA procedure and a non-contention based RA procedure. Such division depends upon whether the RA preamble used during the RA procedure is selected by the UE itself or selected by the BS.

In the contention based RA procedure, according to the decoupled DL/UL scenario, an RA preamble transmitted from the UE should be received by the low power BS, which manages the UL transmission from the UE, as discussed previously. On the other hand, Msg 2 of the RA procedure, i.e., an RAR, which may include a TA command, a UL grant and a temporary C-RNTI, should be sent by the high power BS, which is in charge of the DL transmission to UE, also as discussed previously. According to the 3GPP specification, the maximum delay between the RA preamble Tx and the RAR Rx is 13 ms at most (the largest value of ResponseWindowSize is 10 ms), which is apparently less than the latency of "'any' backhaul connections" (∼50-100ms). Thus, decrease of the latency of the backhaul link so as to satisfy the strict delay requirement between the RA preamble Tx and RAR Rx would be a critical factor in performing the contention based RA procedure in the heterogeneous network, as illustrated in Fig. 1.

In the non-contention based RA procedure, in which a dedicated preamble would have been allocated to the UE for RA attempts and thus the BS is able to identify the UE by the dedicated preamble, the BS uses a "PDCCH order" to initiate the RA procedure for delivery of new DL data. Since the largest periodicity of a PRACH is 20ms according to the current the 3GPP specification, it is requested that the delay between the BS's transmission of the PDCCH order in the DL and the UE's transmission of the dedicated RA preamble in the UL as a response takes no longer than 20ms. However, when the DL/UL decoupled scenario is employed, since the PDCCH order is transmitted by the high power BS yet the RA attempts (i.e., dedicated preambles) are received by the low power BS, it is very likely to engender an extended delay between the PDCCH order Tx and the RA preamble Rx, which needs to be shortened in view of the periodicity of the PRACH. Document US201204064 discloses a method wherein the wireless devices initiates random access procedure with an high power base when the access to a femtocell base station (low power base station) is not authorized.

### SUMMARY:

The invention is defined by the independent claims. Further embodiments are defined by dependent claims. To address or mitigate at least one of the above potential problems, certain embodiments of the present invention would provide for an efficient way of performing an RA procedure in a heterogeneous network, thereby shortening the latency of the RA procedure due to the backhaul link and accelerating performance of the RA procedure.

According to an embodiment of the invention, there is provided a method for performing an RA procedure in a network including a high power BS, a low power BS and a UE, wherein the UE is in connection with the high power BS in a DL direction and is in connection with the low power BS in a UL direction. The method comprises performing, by the UE, the RA procedure with the low power BS if the respective RA procedure is initiated by the UE. The method further comprises performing, by the UE, the RA procedure with the high power BS if the respective RA procedure is initiated by the high power BS.

According to another embodiment, there is provided a UE for performing an RA procedure in a network including a high power BS, a low power BS and the UE, wherein the UE is in connection with the high power BS in a DL direction and is in connection with the low power BS in a UL direction. The UE is configured to perform the random access procedure with the low power base station if the RA procedure is initiated by the UE and the UE is configured to perform the random access procedure with the high power base station if the RA procedure is initiated by the high power BS.

According to a further embodiment, there is provided a network configured to perform a random access procedure. The network comprises a high power BS, a low power BS and a UE, wherein the UE is configured to perform a random access procedure with the low power base station if the respective random access procedure is initiated by the user equipment, and perform a random access procedure with the high power base station if the respective random access procedure is initiated by the high power base station, and wherein the UE is in connection with the high power BS in a DL direction and is in connection with the low power BS
in a UL direction.

According to an additional embodiment, there is provided a high power BS for performing an RA procedure in a network including the high power BS, a low power BS and a UE, wherein the UE is in connection with the high power BS in a DL direction and is in connection with the low power BS in a UL direction. The high power BS comprises a transmitting module, adapted to transmit messages in relation to the RA procedure. The high power BS further comprises a receiving module, adapted to receive messages in relation to the RA procedure, wherein if the RA procedure is initiated by the high power BS, the transmitting module is adapted to transmit to the UE the messages in relation to the RA procedure between the UE and the high power BS and the receiving module is adapted to receive from the UE the messages in relation to the RA procedure between the UE and the high power BS, wherein the transmitting module is adapted to transmit a RA response on a different resource from a resource allocated for transmission of a RA response in a RA procedure initiated by the user equipment (103) with the low power base station (102).

According to the foregoing embodiments of the present invention, the UE-initiated RA procedure is carried out between the UE and the low power BS and the high power BS-initiated RA procedure is carried out between the high power BS and the UE. In this manner, the duration of the RA procedure conducted under the decoupled DL UL scenario can be significantly shortened and thereby the delay needs as specified under the LTE system or other possible systems could be well met. Further, interference that might take place among multiple UEs performing the RAs simultaneously can be alleviated or mitigated since the messages in relation to the RAs, such as the RAR and the preambles, are
transmitted on respective different resources.

### BRIEF DESCRIPTION OF THE DRAWINGS:

Further embodiments, details, advantages, and modifications of the present invention will become apparent from the following detailed description of the preferred embodiments, which is to be taken in conjunction with the accompanying drawings, wherein:
Fig. 1 illustrates a simplified and exemplary heterogeneous network in which certain embodiments of the present invention can be practiced;
Fig. 2 schematically illustrates performing RA procedures in the heterogeneous network as illustrated in Fig. 1 according to an embodiment of the present invention;
Fig. 3 schematically illustrates a signaling diagram for performing a UE-initiated RA procedure according to an embodiment of the present invention;
Fig. 4 schematically illustrates another signaling diagram for performing a high power BS-initiated RA procedure according to an embodiment of the present invention;
Fig. 5 is a simplified schematic block diagram illustrating a UE according to one embodiment of the present invention; and
Fig. 6 is a simplified schematic block diagram illustrating a BS, which may be embodied as a low power BS or high power BS, according to another embodiment of the present invention.

### DETAILED DESCRIPTION:

Embodiments of the invention will be described thoroughly hereinafter with reference to the accompanying drawings. It will be apparent to those skilled in the art that the invention may, however, be embodied in many different forms and should not be construed as limited to the embodiments and specific details set forth herein. Like numbers refer to like elements throughout the specification.

The features, structures, or characteristics of the invention described throughout this specification may be combined in any suitable manner in one or more embodiments. For example, the usage of the phrases "certain embodiments," "some embodiments," or other similar language, throughout this specification refers to the fact that a particular feature, structure, or characteristic described in connection with the embodiment may be included in at least one embodiment of the present invention. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more embodiments.

Embodiments of the invention may be applied in various wireless networks, including but not being limited to the 3GPP LTE network. Given the rapid development in communications, there will of course also be future type wireless communication technologies and systems with which the present invention may be embodied. It should not be seen as limiting the scope of the invention to only the aforementioned system.

In the context of the disclosure, for example, the term "high power BS," as implied by its name, may refer to any BSs that have relatively high transmission power and thereby cover a relatively large coverage area. Examples of such a high power BS is a macro BS or macro eNB. Likewise, the term "low power BS" may refer to any BSs that have relatively low transmission power and thereby cover a relatively smaller coverage area as compared to the high power BS. Examples of such a low power BS is a pico BS, a femto BS, and a relay node, as widly employed in the current various communication system. Furthermore, resources according to embodiments of the present invention may include but are not limited to a time domain, a frequency domain, a code domain, a spatial domain, or a combination of such domains.

To minimize the RA delay that might arise under the decoupled DL/UL scenario and suit the RA timing requirements in this scenario, the embodiments of the present invention propose that the RA initiated by the high power BS be performed directly between the high power BS and the UE without involvement of the low power BS and that the RA initiated by the UE be performed directly between the low power BS and the UE without involvement of the high power BS. By ways of this, the RA procedure under the decouple DL/UL scenario could be carried out in a more efficient and straightforward manner. To avoid potential interference that might arise during multiple ongoing RA procedures, the embodiments of the present invention also propose allocating different resources for delivery of different RARs and RA preambles.

Fig. 1 illustrates a simplified and exemplary heterogeneous network 100 in which certain embodiments of the present invention can be practiced. Details regarding the network 100 have been described previously and thus further description is omitted herein for simplicity's sake.

Fig. 2 schematically illustrates performing RA procedures in the heterogeneous network as illustrated in Fig. 1 according to an embodiment of the present invention. Shown at the left part of the Fig. 2 are some steps of an ongoing RA procedure initiated by the high power BS 101 and corresponding resource allocation for PDCCH, as exemplarily depicted by a block diagram. Upon receipt of a PDCCH order from the high power BS 101, the UE 103 may send, among other things, its dedicated preamble to the high power BS 101 in the UL direction and as a response, the high power BS 101 sends to the UE 103 an RAR together with pertinent DL data in the DL direction.

Shown at the right part of the Fig. 2 are some steps of an ongoing RA procedure initiated by the UE 103. At the outset, the UE 103 may initiate an RA procedure by sending a preamble to the low power BS 102 together with some UL data and then, as a response, may receive an RAR from the low power BS 102. Further shown at the right part of the Fig. 2 is corresponding resource allocated for PDCCH, as exemplarily depicted by a block diagram. It can be noted from the two resource allocation block diagrams that the resource as reserved at the high power BS 101 side is exactly used at the low power BS 102 side for RAR delivery. Thereby, different resources would be used to transmit the RARs from the high power BS 101 and low power BS 103 on the PDCCHs, respectively. By this pre-allocation or pre-coordination between the high power BS and the low power BS of the resources for the RAR transmission, the interference from the high power BS DL transmission to reception of the RAR by the UE from the low power BS could be avoided.

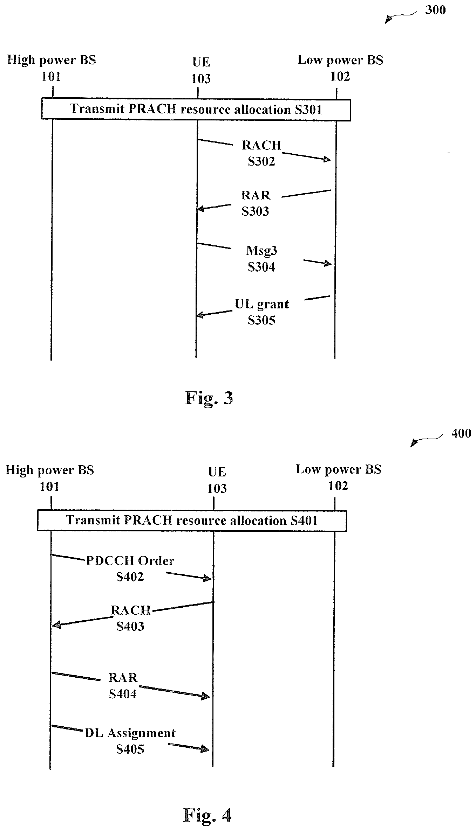

Although the high power BS-initiated and the UE-initiated procedures are both shown in Fig. 2, it is to be understood that the UE may only initiate or participate in a single RA procedure at a time. Further, some other messages or steps, such as those illustrated in Figs. 3 and 4, are not shown in Fig. 2 merely for a simplifying purpose.

Fig. 3 schematically illustrates a signaling diagram 300 for performing a UE-initiated RA procedure (i.e., a contention based RA procedure) according to an embodiment of the present invention. The signaling diagram 300 begins with step S301, at which the UE 103 is informed, by the high power BS 101, low power BS 102 or a potential third party, of information regarding PRACH resource allocation. The reason for this PRACH resource allocation or partition is discussed as below.

In the UE-initiated and the high power BS-initiated RAs, the UE may need higher power to send an RA preamble aiming at the high power BS than an RA preamble aiming at the low power BS. If both types of RA preambles are sent using the same PRACH resource, the preamble aiming at the high power BS would impose large interference on the preambles sent by other potential UEs and aiming at the low power BS. Therefore, a resource partition method is necessary to separate PRACH resources for the high power BS and for the low power BS, and the signaling of the resource allocation information to the UEs can be implemented in different ways.

For instance, the information regarding the PRACH resource partition could be sent to the UEs beforehand, e.g., via a broadcasted SIB or dedicated RRC signaling, such that the UEs could have knowledge of which PRACH can be applied to perform RA attempts directed to the low power BS and which PRACH can be applied to send the preamble directed to the high power BS once RA commands, i.e., PDCCH orders, have been received from the high power BS.

As a further example, the information regarding the PRACH resource partition could be sent to the UEs when necessary. To this end, the PRACH configuration information broadcasted in the SIB is actually only for PRACH reception at the low power BS. As compared thereto, the PRACH resources allocated for the high power BS reception would be delivered to UEs along with the RA attempt commands sent by the network, in the form of the RRC, MAC CE, DCI or the like.

Simply put, the embodiments of the present invention propose transmitting respective RA preambles on respective different resources with respect to the high power BS and the low power BS, thereby mitigating or alleviating the interference as discussed before.

Returning back to Fig. 3, at step S302, in order to send UL data or to re-establish an RRC connection, the UE 103 would send an RA preamble, also referred to as RACH Msg 1, to the low power BS 102 to initiate an RA procedure. As discussed above, this RA attempt including the RA preamble should be sent to the low power BS 102 using the PRACH resources as notified at step S301.

All things being equal, as a response, the low power BS 102, instead of the high power BS 103, may send an RAR, also referred to as RACH Msg 2, to the UE 103 at step S303. The RAR may include a preamble identifier, a UL grant, a temporary C-RNTI and a time alignment command, and the like. It may be easy for the low power BS 102 to do so since a UL grant included in the RAR could be simplified.

Similar to the PRACH resource partition, the embodiments of the present invention also propose using a resource partition scheme to implement transmission of RARs with respect to the high power BS 101 and low power BS 102 on respective different resources. Because details regarding the RAR resource partition have been described in connection with Fig. 2, a further discussion thereof is omitted herein for a brief purpose.

Upon receiving the RAR from the low power BS 102 at step S303, the UE may form an RACH Msg 3 based upon the RAR received from the low power BS 102 and send it to the low power BS 102 through the UL grant at step S304. The Msg 3 may include a BSR of a UL buffer in the UE.

Afterwards, at step S305, a new UL grant may be formed at the low power BS 102 and sent to the UE 103 as a Msg 4. Based upon the new UL grant, UL transmission from the UE 103 commences (not shown).

With less involvement of the high power BS 101, the UE-initiated RA procedure as illustrated in Fig. 3 can be completed in a straightforward and time-saving way, thereby meeting the strict delay requirement as specified by the LTE system towards the RA procedure.

Fig. 4 schematically illustrates another signaling diagram 400 for performing a high power BS-initiated RA procedure (i.e., a non-contention based RA procedure) according to an embodiment of the present invention. As illustrated in Fig. 4, similar to the step S301 as shown in Fig. 3, the signaling diagram 400 also begins with transmitting information regarding the PRACH resource allocation to the UE 103, as performed by step S401. Then, due to arrival of new DL data or similar reasons, a high power BS-initiated RA procedure may commence by sending a PDCCH order on a PDCCH or ePDCCH to the UE 103 at step S402.

Because the RA initiated by the PDCCH order is a contention-free or non-contention based RA procedure as mentioned before, the UE 103 has already been allocated a dedicated preamble by the high power BS 101. Thus, the high power BS 101 is able to identify the US 103 through the RA preamble as sent by the UE 103 at step S403 for acquiring UL synchronization. Similar to those discussed in Fig. 3, the dedicated preamble should be sent using the PRACH resources as previously partitioned so as not to cause harmful interference to other UEs. Upon receipt of the dedicated preamble, the high power BS 101 sends an RAR to the UE 103 at step S404. Thereafter, the high power BS 101 may, at step S405, send to the UE 103 a DL assignment which may also be a UL grant, as a non-limiting example.

As seen from the signaling diagram 400, it is straightforward and efficient way to cause the high power BS 101 to send the RAR such that the strict delay requirement can be satisfied. Further, since transmission of Msg 3 is unnecessary for the contention-free based RA procedure, UL resource reservation in this regard could also be omitted at the low power BS 102.

It should be noted that the foregoing has discussed main steps of the RA procedure in connection with Figs. 3 and 4, it is purely for the purposes of explaining the embodiments of the present invention. A person skilled in the art can readily understand and easily implement the embodiments of the invention based upon the disclosure of this specification in combination of knowledge of the existing RA procedure as specified in the 3GPP specification. Further, it is to be understood that additional or alternative steps that might take place in the RA procedure are not set forth herein so as not to unnecessarily obscure the scope of the embodiments of the present invention.

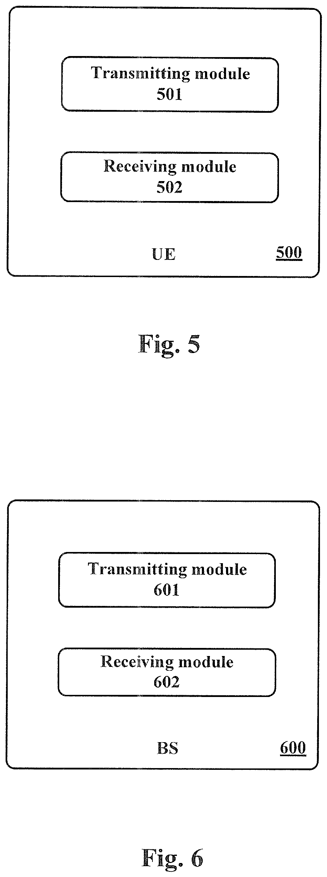

Fig. 5 is a simplified schematic block diagram illustrating a UE 500 according to one embodiment of the present invention. As illustrated in Fig. 5, the UE 500 may include a transmitting module 501 adapted to transmit messages in relation to the RA procedure and a receiving module 502 adapted to receive messages in relation to the RA procedure. The message may be Msgs 1-4, including the RA preamble and the RAR, as discussed with reference with Figs. 3 and 4.

In case the RA procedure is initiated by the UE 500 (or 103), the transmitting module 501 is adapted to transmit to the low power BS the messages (e.g., including the preamble or Msg 3) in relation to the RA procedure therebetween and the receiving module 502 is adapted to receive from the low power BS 102 the messages (e.g., including the RAR or UL grant) in relation to the RA procedure therebetween.

In case the RA procedure is initiated by the high power BS, the transmitting module 501 is adapted to transmit to the high power BS the messages in relation to the RA procedure therebetween and the receiving module 502 is adapted to receive from the high power BS the messages in relation to the RA procedure therebetween. Similarly, the message may relate to Msgs 1-4, including the RA preamble and the RAR, as discussed with reference with Fig. 4.

In an embodiment, the transmitting module 501 is adapted to transmit respective RA preambles on respective different resources to the low power BS and high power BS so as to mitigate or eliminate the potential interference. In another embodiment, in order for remove of the potential interference, the receiving module 502 is adapted to receive, on respective different resources, respective RARs from the low power BS and the high power BS.

Fig. 6 is a simplified schematic block diagram illustrating a BS 600 according to another embodiment of the present invention. As illustrated in Fig. 6, the BS 600 may include a transmitting module 601 adapted to transmit messages in relation to the RA procedure. The BS 600 may further include a receiving module 602 adapted to receive messages in relation to the RA procedure.

When the BS 600 is embodied as a high power BS, if the RA procedure is initiated by the high power BS, the transmitting module 601 is adapted to transmit to the UE the messages (e.g., PDCCH order, RAR or DL assignment) in relation to the RA procedure between the UE and the high power BS and the receiving module 602 is adapted to receive from the UE the messages (e.g., the dedicated preamble) in relation to the RA procedure between the UE and the high power BS, as is the case in the Fig. 4. In an embodiment, the transmitting module 601 is adapted to transmit an RAR on a different resource from a resource allocated for transmission of an RAR in a RA procedure initiated by the UE with the low power BS. In another embodiment, the high power BS may be a macro BS.

When the BS 600 is embodied as a low power BS, if the RA procedure is initiated by the UE, the transmitting module 601 is adapted to transmit to the UE the messages (e.g., the RAR or UL grant) in relation to the RA procedure between the UE and the low power BS and the receiving module 602 is adapted to receive from the UE the messages (e.g., the RA preamble or Msg 3) in relation to the RA procedure between the UE and the low power BS, as is the case in Fig. 3. In an embodiment, the transmitting module 601 is adapted to transmit an RAR on a different resource from a resource allocated for transmission of an RAR in a RA procedure initiated by the high power BS with the UE. In another embodiment, the low power BS may be one of a pico base station, a femto base station, and a relay node.

It will be appreciated that the invention may be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

It is to be noted that, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Further, it is to be noted that, the order of features/steps in the claims or in the specification do not imply any specific order in which the features/steps must be worked. Rather, the steps/features may be performed in any suitable order.

The terminology used herein is for the purpose of describing particular embodiments only and is not intended to limit to the invention. As used herein, the singular forms "a," "an" and "the" are intended to comprise the plural forms as well, unless otherwise stated. It will be further understood that the terms "including," "comprising" and conjugation thereof when used herein, specify the presence of stated features, integers, steps, operations, elements, and/or components, but do not preclude the presence or addition of one or more other features, integers, steps, operations, elements, components, and/or groups thereof.

Although the invention has been particularly shown and described with reference to exemplary embodiments thereof, it will be understood by those skilled in the art that various changes in form and details may be made without departing from the scope of the invention as defined by the appended claims. The exemplary embodiments should be considered in descriptive sense only and not for purposes of limitation. Therefore, the scope of the invention is defined not by the detailed description of the invention but by the appended claims.

## Claims

1. A method (300, 400) for performing a random access procedure in a network including a high power base station (101), a low power base station (102), and a user equipment (103), **characterized in that** the user equipment (103) is in connection with the high power base station (101) in a downlink direction and is in connection with the low power base station (102) in an uplink direction, the method (300,400) comprising:
performing (S302-S305), by the user equipment (103), the random access procedure with the low power base station (102) if the respective random access procedure is initiated by the user equipment (103); and
performing (S402-S405), by the user equipment (103), the random access procedure with the high power base station (101) if the respective random access procedure is initiated by the high power base station (101).

2. The method as recited in Claim 1, wherein performing the respective random access procedures with the low power base station (102) and high power base station (101) comprises transmitting respective random access preambles to the low power base station (102) and the high power base station (101), wherein the respective random access preambles are transmitted on respective different resources.

3. The method as recited in Claim 1, wherein performing the respective random access procedures with the low power base station (102) and high power base station (101) comprises receiving respective random access responses from the low power base station (102) and high power base station (101).

4. The method as recited in Claim 3, wherein the respective random access responses are received on respective different resources.

5. The method as recited in Claim 1, wherein the high power base station (101) is a macro base station, and the low power base station (102) is one of a pico base station, a femto base station, and a relay node.

6. A user equipment (103, 500) for performing a random access procedure in a network including a high power base station (101), a low power base station (102) and the user equipment (103, 500), **characterized in that** the user equipment (103, 500) is in connection with the high power base station (101) in a downlink direction and is in connection with the low power base station (102) in an uplink direction, wherein the user equipment (103, 500) is configured to:
perform the random access procedure with the low power base station (102) if the respective random access procedure is initiated by the user equipment (103, 500); and
perform the random access procedure with the high power base station (101) if the respective random access procedure is initiated by the high power base station (101).

7. The user equipment as recited in Claim 6, wherein the user equipment (103, 500) is adapted to transmit respective random access preambles to the low power base station (102) and high power base station (101), the respective random access preambles being transmitted on respective different resources.

8. The user equipment as recited in Claim 6, wherein the user equipment (103, 500) is adapted to receive respective random access responses from the low power base station (102) and the high power base station (101), the respective random access responses being received on respective different resources.

9. A network configured to perform a random access procedure, the network comprising:
a high power base station (102);
a low power base station (101); and
a user equipment (103) configured to:
perform the random access procedure with the low power base station (102) if the respective random access procedure is initiated by the user equipment (103), and
perform the random access procedure with the high power base station (101) if the respective random access procedure is initiated by the high power base station (101),
wherein the user equipment (103) is in connection with the high power base station (101) in a downlink direction and is in connection with the low power base station (102) in an uplink direction.

10. The network as recited in Claim 9, wherein the low power base station (102) is one of a pico base station, a femto base station, and a relay node.

11. The network as recited in Claim 9, wherein the high power base station (101) is a macro base station.

## Patentansprüche

1. Verfahren (300, 400) zur Durchführung eines Direktzugriffsverfahrens in einem Netzwerk, das eine Hochleistungsbasisstation (101), eine Niederleistungsbasisstation (102) und eine Benutzervorrichtung (103) beinhaltet, **dadurch gekennzeichnet, dass** die Benutzervorrichtung (103) in eine Downlink-Richtung mit der Hochleistungsbasisstation (101) in Verbindung steht und in eine Uplink-Richtung mit der Niederleistungsbasisstation (102) in Verbindung steht, wobei das Verfahren (300, 400) Folgendes umfasst:
Durchführen (S302-S305), durch die Benutzervorrichtung (103), des Direktzugriffsverfahrens mit der Niederleistungsbasisstation (102), falls das jeweilige Direktzugriffsverfahren durch die Benutzervorrichtung (103) initiiert wird; und
Durchführen (S402-S405), durch die Benutzervorrichtung (103), des Direktzugriffsverfahrens mit der Hochleistungsbasisstation (101), falls das jeweilige Direktzugriffsverfahren durch die Hochleistungsbasisstation (101) initiiert wird.

2. Verfahren nach Anspruch 1, wobei das Durchführen der jeweiligen Direktzugriffsverfahren mit der Niederleistungsbasisstation (102) und der Hochleistungsbasisstation (101) das Übertragen jeweiliger Direktzugriffspräambeln an die Niederleistungsbasisstation (102) und die Hochleistungsbasisstation (101) umfasst, wobei die jeweiligen Direktzugriffspräambeln auf jeweils unterschiedlichen Mitteln übertragen werden.

3. Verfahren nach Anspruch 1, wobei das Durchführen der jeweiligen Direktzugriffsverfahren mit der Niederleistungsbasisstation (102) und der Hochleistungsbasisstation (101) das Empfangen jeweiliger Direktzugriffsantworten von der Niederleistungsbasisstation (102) und der Hochleistungsbasisstation (101) umfasst.

4. Verfahren nach Anspruch 3, wobei die jeweiligen Direktzugriffsantworten auf jeweils unterschiedlichen Mitteln empfangen werden.

5. Verfahren nach Anspruch 1, wobei die Hochleistungsbasisstation (101) eine Makro-Basisstation ist und die Niederleistungsbasisstation (102) eine von einer Piko-Basisstation, einer Femto-Basisstation und einem Relaisknoten ist.

6. Benutzervorrichtung (103, 500) zur Durchführung eines Direktzugriffsverfahrens in einem Netzwerk, das eine Hochleistungsbasisstation (101), eine Niederleistungsbasisstation (102) und die Benutzervorrichtung (103, 500) beinhaltet, **dadurch gekennzeichnet, dass** die Benutzervorrichtung (103, 500) in eine Downlink-Richtung mit der Hochleistungsbasisstation (101) in Verbindung steht und in eine Uplink-Richtung mit der Niederleistungsbasisstation (102) in Verbindung steht, wobei die Benutzervorrichtung (103, 500) für Folgendes konfiguriert ist:
Durchführen des Direktzugriffsverfahrens mit der Niederleistungsbasisstation (102), falls das jeweilige Direktzugriffsverfahren durch die Benutzervorrichtung (103, 500) initiiert wird; und
Durchführen des Direktzugriffsverfahrens mit der Hochleistungsbasisstation (101), falls das jeweilige Direktzugriffsverfahren durch die Hochleistungsbasisstation (101) initiiert wird.

7. Benutzervorrichtung nach Anspruch 6, wobei die Benutzervorrichtung (103, 500) ausgelegt ist, um jeweilige Direktzugriffspräambeln an die Niederleistungsbasisstation (102) und die Hochleistungsbasisstation (101) zu übertragen, wobei die jeweiligen Direktzugriffspräambeln auf jeweils unterschiedlichen Mitteln übertragen werden.

8. Benutzervorrichtung nach Anspruch 6, wobei die Benutzervorrichtung (103, 500) ausgelegt ist, um jeweilige Direktzugriffsantworten von der Niederleistungsbasisstation (102) und der Hochleitungsbasisstation (101) zu empfangen, wobei die jeweiligen Direktzugriffsantworten auf jeweils unterschiedlichen Mitteln empfangen werden.

9. Netzwerk, das konfiguriert ist, ein Direktzugriffsverfahren durchzuführen, wobei das Netzwerk Folgendes umfasst:
eine Hochleistungsbasisstation (102);
eine Niederleistungsbasisstation (101); und eine Benutzervorrichtung (103), die für Folgendes konfiguriert ist:
Durchführen des Direktzugriffsverfahrens mit der Niederleistungsbasisstation (102), falls das jeweilige Direktzugriffsverfahren durch die Benutzervorrichtung (103) initiiert wird, und
Durchführen des Direktzugriffsverfahrens mit der Hochleistungsbasisstation (101), falls das jeweilige Direktzugriffsverfahren durch die Hochleitungsbasisstation (101) initiiert wird,
wobei die Benutzervorrichtung (103) in eine Downlink-Richtung mit der Hochleistungsbasisstation (101) in Verbindung steht und in eine Uplink-Richtung mit der Niederleistungsbasisstation (102) in Verbindung steht.

10. Netzwerk nach Anspruch 9, wobei die Niederleistungsbasisstation (102) eine von einer Piko-Basisstation, einer Femto-Basisstation und einem Relais-Knoten ist.

11. Netzwerk nach Anspruch 9, wobei die Hochleistungsbasisstation (101) eine Makro-Basisstation ist.

## Revendications

1. Procédé (300, 400) pour effectuer une procédure d'accès aléatoire dans un réseau comprenant une station de base de haute puissance (101), une station de base de basse puissance (102) et un équipement utilisateur (103), **caractérisé en ce que** l'équipement utilisateur (103) est en connexion avec la station de base de haute puissance (101) dans une direction de liaison descendante et est en connexion avec la station de base de basse puissance (102) dans une direction de liaison montante, le procédé (300, 400) comprenant :
l'exécution (S302-S305), par l'équipement utilisateur (103), de la procédure d'accès aléatoire avec la station de base de basse puissance (102) si la procédure d'accès aléatoire respective est lancée par l'équipement utilisateur (103) ; et l'exécution (S402-S405), par l'équipement utilisateur (103), de la procédure d'accès aléatoire avec la station de base de haute puissance (101) si la procédure d'accès aléatoire respective est lancée par la station de base de haute puissance (101) .

2. Procédé selon la revendication 1, dans lequel l'exécution des procédures d'accès aléatoire respectives avec la station de base de basse puissance (102) et la station de base de haute puissance (101) comprend la transmission de préambules d'accès aléatoire respectifs à la station de base de basse puissance (102) et la station de base de haute puissance (101), dans lequel les préambules d'accès aléatoire respectifs sont transmis sur des ressources différentes respectives.

3. Procédé selon la revendication 1, dans lequel l'exécution des procédures d'accès aléatoire respectives avec la station de base de basse puissance (102) et la station de base de haute puissance (101) comprend la réception de réponses d'accès aléatoire respectives à partir de la station de base de basse puissance (102) et la station de base de haute puissance (101) .

4. Procédé selon la revendication 3, dans lequel les réponses d'accès aléatoire respectives sont reçues sur des ressources différentes respectives.

5. Procédé selon la revendication 1, dans lequel la station de base de haute puissance (101) est une macro station de base et la station de base de basse puissance (102) est une parmi une pico station de base, une femto station de base et un noeud relais.

6. Équipement utilisateur (103, 500) pour effectuer une procédure d'accès aléatoire dans un réseau comprenant une station de base de haute puissance (101), une station de base de basse puissance (102) et l'équipement utilisateur (103, 500), **caractérisé en ce que** l'équipement utilisateur (103, 500) est en connexion avec la station de base de haute puissance (101) dans une direction de liaison descendante et est en connexion avec la station de base de basse puissance (102) dans une direction de liaison montante, dans lequel l'équipement utilisateur (103, 500) est configuré pour :
effectuer la procédure d'accès aléatoire avec la station de base de basse puissance (102) si la procédure d'accès aléatoire respective est lancée par l'équipement utilisateur (103, 500) ; et
effectuer la procédure d'accès aléatoire avec la station de base de haute puissance (101) si la procédure d'accès aléatoire respective est lancée par la station de base de haute puissance (101).

7. Équipement utilisateur selon la revendication 6, dans lequel l'équipement utilisateur (103, 500) est adapté pour transmettre des préambules d'accès aléatoire respectifs à la station de base de basse puissance (102) et la station de base de haute puissance (101), les préambules d'accès aléatoire respectifs étant transmis sur des ressources différentes respectives.

8. Équipement utilisateur selon la revendication 6, dans lequel l'équipement utilisateur (103, 500) est adapté pour recevoir des réponses d'accès aléatoire respectives à partir de la station de base de basse puissance (102) et la station de base de haute puissance (101), les réponses d'accès aléatoire respectives étant reçues sur des ressources différentes respectives.

9. Réseau configuré pour effectuer une procédure d'accès aléatoire, le réseau comprenant :
une station de base de haute puissance (102) ;
une station de base de basse puissance (101) ; et
un équipement utilisateur (103) configuré pour :
effectuer la procédure d'accès aléatoire avec la station de base de basse puissance (102) si la procédure d'accès aléatoire respective est lancée par l'équipement utilisateur (103), et
effectuer la procédure d'accès aléatoire avec la station de base de haute puissance (101) si la procédure d'accès aléatoire respective est lancée par la station de base de haute puissance (101),
dans lequel l'équipement utilisateur (103) est en connexion avec la station de base de haute puissance (101) dans une direction de liaison descendante et est en connexion avec la station de base de basse puissance (102) dans une direction de liaison montante.

10. Réseau selon la revendication 9, dans lequel la station de base de basse puissance (102) est une parmi une pico station de base, une femto station de base et un noeud relais.

11. Réseau selon la revendication 9, dans lequel la station de base de haute puissance (101) est une macro station de base.
